**Europäisches Patentamt**

(19) **European Patent Office**

**Office européen des brevets**

(11) Numéro de publication: **0 117 802**
**B1**

(12) **FASCICULE DE BREVET EUROPEEN**

(45) Date de publication du fascicule du brevet:
27.01.88

(51) Int. Cl.⁴: **G 21 C 1/02**

(21) Numéro de dépôt: **84400290.7**

(22) Date de dépôt: **13.02.84**

(54) Réacteur nucléaire à neutrons rapides à structure interne allégée.

(30) Priorité: **22.02.83 FR 8302859**

(43) Date de publication de la demande:
**05.09.84 Bulletin 84/36**

(45) Mention de la délivrance du brevet:
**27.01.88 Bulletin 88/4**

(84) Etats contractants désignés:
**BE DE GB IT**

(56) Documents cités:
**DE - A - 2 430 191**
**DE - A - 2 535 378**
**FR - A - 2 150 627**
**GB - A - 2 090 042**

(73) Titulaire: **COMMISSARIAT A L'ENERGIE ATOMIQUE,
31/33, rue de la Fédération, F-75015 Paris (FR)**

(72) Inventeur: **Artaud, Robert, 9, Avenue Claude Debussy,
F-13100 Aix-en-Provence (FR)**
Inventeur: **Aubert, Michel, Chemin de Sainte Roustagne,
F-04100 Manosque (FR)**
Inventeur: **Renaux, Charley, Les Extrées,
F-13490 Jouques (FR)**

(74) Mandataire: **Mongrédien, André et al, c/o
BREVATOME 25, rue de Ponthieu, F-75008 Paris (FR)**

# Description

La présente invention se rapporte à un réacteur nucléaire à neutrons rapides refroidi par un métal liquide tel que du sodium, et de type intégré, dans lequel l'ensemble du circuit primaire est contenu dans une cuve principale obturée par une dalle.

Deux versions ont été proposées pour la cuve interne des réacteurs de type intégré tels que Super-Phénix.

La cuve interne dite à redan, qui est décrite dans les documents FR-A-2 220 847 et Fr-A-2 333 328, est la solution retenue pour Super-Phénix. Le redan sépare le sodium chaud et le sodium froid entre l'entrée et la sortie de l'échangeur, et la cuve principale est protégée par un baffle thermique. Cette structure complexe est très coûteuse car sa réalisation nécessite une masse importante d'acier inoxydable de qualité nucléaire.

Une autre solution consiste à confiner le sodium chaud à l'intérieur d'une cuve cylindrique de diamètre sensiblement égal à celui du cœur, comme il est proposé dans les documents FR-A-2 337 408 et EP-A-0 018 262. Cette solution est également illustrée par le document FR-A-2 150 627 qui décrit un réacteur nucléaire à neutrons rapides refroidi par un métal liquide de type integré, et comprenant une cuve principale obturée par une dalle et contenant le cœur du réacteur, une cuve interne disposée à l'intérieur de la cuve principale et définissant dans cette dernière une zone chaude formée à l'intérieur de la cuve interne et remplie de métal liquide relativement chaud et une zone froide formée entre la cuve principale et la cuve interne et remplie de métal liquide relativement froid, au moins une pompe de circulation au travers du cœur du métal liquide entre la zone froide et la zone chaude et au moins un échangeur de chaleur disposé entre la zone chaude et la zone froide, la cuve interne comprenant une virole tronconique supérieure reliée par sa grande base à une virole inférieure et dont la petite base est prolongée par une virole cylindrique de petit diamètre, le cœur du réacteur reposant sur le fond de la virole inférieure par l'intermédiaire d'une structure de supportage et d'alimentation.

Le sodium chaud doit alors être amené à l'entrée de l'échangeur par une conduite étanche.

Cette conduite, et les viroles assurant l'étanchéité de la liaison, sont soumises à des contraintes d'origine mécanique et thermique qui rendent leur réalisation particulièrement délicate. Pour s'en affranchir on est amené, par exemple, à doubler cette cuve interne d'un baffle; on retombe alors dans l'inconvénient de la solution a redan.

Un autre inconvénient, commun à ces deux types de cuve interne, réside dans les fuites de chaleur non négligeables vers la dalle du réacteur par suite de l'importance de la surface libre du sodium chaud par rapport à celle du sodium froid.

La présente invention a précisément pour objet un réacteur nucléaire à neutrons rapides de type intégré ne présentant pas ces inconvénients des réacteurs connus et se caractérisant notamment par un gain de poids important, par une grande simplicité et par une construction facile, ces trois éléments combinés conduisant à une réduction notable du coût de l'installation.

A cet effet et conformément à l'invention, un réacteur nucléaire à neutrons rapides refroidi par un métal liquide du type défini précédemment est caractérisé en ce que la virole inférieure est une virole tronconique reliée par sa grande base à la virole tronconique supérieure.

Selon un premier mode de réalisation, les deux viroles tronconiques sont reliées directement entre elles, au voisinage de leurs grandes bases.

Selon un autre mode de réalisation, les deux viroles tronconiques sont reliées suivant leurs grandes bases, soit directement, soit par l'intermédiaire d'une virole cylindrique.

Ces caractéristiques de la cuve interne correspondent à une forme relativement simple et facile à réaliser. De plus, par rapport à l'art antérieur, elles permettent de supprimer les baffles doublant la cuve principale, et les conduites reliant la cuve interne aux échangeurs.

Dans le cas où les deux viroles tronconiques sont reliées directement entre elles, au voisinage de leurs grandes bases, la cuve interne est fixée à la cuve principale suivant la grande base de la virole tronconique sur laquelle est fixée l'autre virole tronconique.

Dans le cas où les deux viroles sont reliées suivant leur grande base, et selon une variante de réalisation de l'invention, la cuve interne est suspendue à la dalle par une virole cylindrique ajourée prolongeant vers le haut ladite virole de grand diamètre. Dans ce cas, la virole cylindrique ajourée et la cuve principale peuvent être suspendues à la dalle par une virole cylindrique unique, ou suspendues l'une et l'autre directement à la dalle.

Selon une autre variante de réalisation de l'invention, la cuve interne repose sur le fond de la cuve principale par l'intermédiaire d'une virole d'appui.

Selon un mode de réalisation particulier de l'invention, les pompes sont suspendues à la dalle et traversent la virole tronconique supérieure pour communiquer par des tuyauteries avec un sommier d'alimentation du cœur constituant une partie de la structure de supportage.

Selon la variante où la cuve interne s'appuie sur la cuve principale, les pompes sont placées dans des cheminées qui traversent, de façon étanche, les deux viroles tronconiques.

De façon comparable, la virole tronconique supérieure supporte des cheminées contenant du métal liquide chaud et les échangeurs sont suspendus à la dalle, disposés dans lesdites cheminées, et traversent la virole tronconique inférieure pour déboucher dans la zone froide.

Si nécessaire, la cuve interne peut être doublée sur toute sa hauteur par un baffle thermique.

Toutefois, compte tenu de la forme de la cuve interne selon l'invention, ce baffle peut être supprimé ou limité à la partie inférieure de la cuve interne comprenant la virole tronconique inférieure et, éventuellement, la virole cylindrique de grand diamètre, le rebord supérieur du baffle étant surplombé par une cloche d'étanchéité portée par la cuve interne.

On décrira maintenant, à titre d'exemples non limitatifs, différentes variantes de réalisation de l'invention en se référant aux dessins annexés dans lesquels:

- les figures 1a et 1b sont des vues en coupe schématique représentant deux modes de réalisation du circuit primaire d'un réacteur à neutrons rapides de type intégré réalisé conformément aux enseignements de la présente invention,

- les figures 2a, 2b, 2c, 2d et 2e illustrent de façon schématique différentes variantes de supportage de la cuve interne du réacteur selon l'invention, et

- les figures 3a, 3b et 3c montrent également de façon schématique trois variantes de réalisation de l'invention pouvant être combinées à volonté avec les variantes des figures 2a à 2e, et se rapportant à la présence éventuelle d'un baffle à l'intérieur de la cuve interne du réacteur.

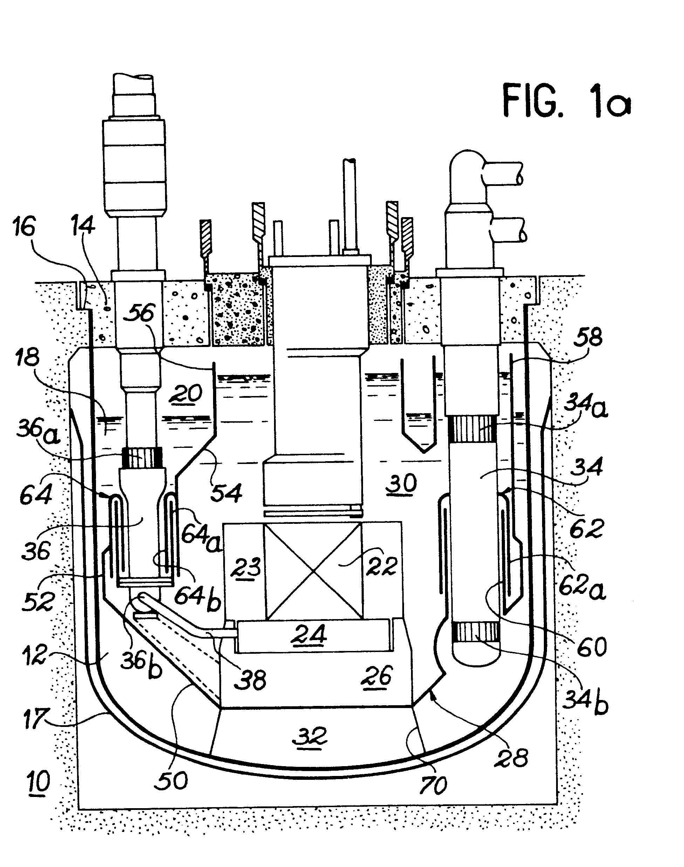

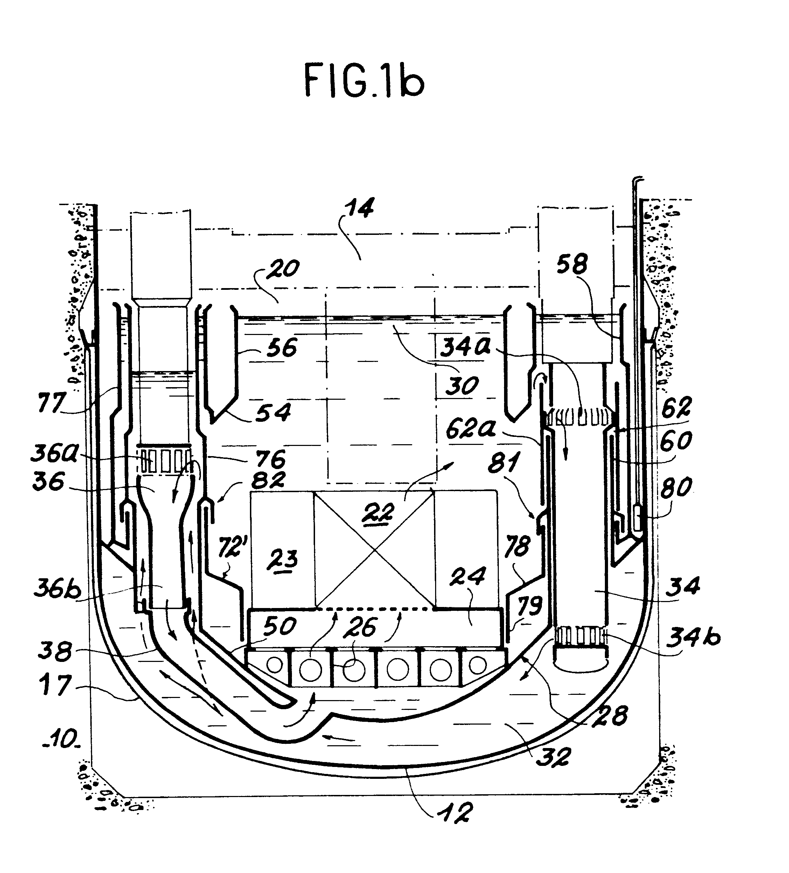

Comme l'illustrent les figures 1a et 1b, la conception d'ensemble du réacteur selon l'invention est conforme à celle des réacteurs à neutrons rapides de type intégré.

Ainsi, le réacteur représenté sur les figures 1a et 1b, comprend un bâtiment réacteur en béton définissant un puits de cuve 10 dans lequel est logée une cuve principale 12 présentant une configuration cylindrique à axe vertical. La cuve 12 est obturée à son extrémité supérieure par une dalle de béton 14 dont le rebord périphérique repose sur une portée annulaire 16 définie à la partie supérieure du puits de cuve 10. Pour des raisons de sûreté, la cuve principale 12 est doublée par une cuve de sécurité 17.

La cuve principale 12 est remplie de sodium liquide 18 surmonté à proximité de la dalle 14 par un ciel de gaz neutre 20 tel que de l'argon.

La cuve principale 12 contient également le cœur 22 du réacteur. De façon connue, le cœur du réacteur est constitué par les assemblages combustibles et fertiles, et il est entouré par une pro- tection neutronique 23. Le cœur 22 et sa protection neutronique 23 reposent sur un sommier 24 assu- rant le supportage du cœur et son alimentation en sodium liquide. Le sommier 24 repose lui-même sur un platelage 26 assurant le supportage de l'ensemble cœur-sommier.

Le circuit primaire intégré représenté sur les figures 1a et 1b comprend de plus une cuve interne 28. Cette cuve 28 permet de séparer le sodium 18 contenu dans la cuve principale 12 en une zone chaude ou collecteur chaud 30 défini à l'intérieur de la cuve 28 et contenant le sodium relative- ment chaud sortant du cœur 22 du réacteur et une zone froide ou collecteur froid 32 formé entre les cuves 12 et 28 et contenant le sodium relativement froid sortant des échangeurs de chaleur 34. Dans ces échangeurs 34, une partie de la chaleur ex- traite du cœur du réacteur par le sodium primaire 18 est transmise de façon connue à un ou plusieurs circuits de sodium secondaires (non représentés) disposés à l'extérieur de la cuve principale 12. Les échangeurs 34 comprennent des orifices d'entrée 34a qui communiquent avec la zone chaude 30 et des orifices de sortie 34b qui communiquent avec la zone froide 32.

La circulation du sodium 18 entre la zone froide 32 et la zone chaude 30 au travers du cœur 22 et inversement entre la zone chaude 30 et la zone froide 32 au travers des échangeurs 34 est commandée par des pompes 36 placées comme les échangeurs 34 et l'ensemble du circuit primaire à l'intérieur de la cuve principale 12.

Afin d'assurer la circulation de sodium qui vient d'être décrite, les pompes 36 comportent des orifices d'aspiration 36a qui communiquent avec la zone froide 32 et des orifices de refoulement 36b qui communiquent avec le sommier d'alimentation 24 du cœur 22 par des canalisations 38.

Bien qu'on n'ait représenté sur les figures 1a et 1b qu'un seul échangeur 34 et une seule pompe 36, plusieurs de ces composants sont généralement prévus à l'intérieur de la cuve principale 12 d'un même réacteur.

De façon connue et comme on l'a représenté sur les figures 1a et 1b, les échangeurs 34 et les pompes 36 sont suspendus à la dalle 14 et disposés dans la région périphérique de la cuve principale 12 entourant le cœur 22.

Conformément à la présente invention et comme le font apparaître clairement les figures 1a et 1b, la cuve interne 28 présente une forme originale et particulièrement simple qui permet, par rapport aux réacteurs connus, de supprimer certaines pièces et de simplifier de façon notable les autres pièces.

Ainsi, dans le cas du mode de réalisation représenté sur la figure 1a, la cuve interne 28 se compose en partant du bas d'une première virole tronconique 50 dont la petite base est tournée vers le bas, d'une virole cylindrique de grand diamètre 52, d'une deuxième virole tronconique 54 dont la petite base est tournée vers le haut et d'une virole cylindrique de petit diamètre 56. Dans une variante non représentée, la virole·cylindrique de grand diamètre 52 pourrait être supprimée, les viroles tronconiques 50 et 54 étant alors raccordées directement l'une à l'autre par leur grande base. Dans ces deux cas, il existe toujours un passage annulaire entre la cuve interne 28 et la cuve principale 12, de telle sorte que le collecteur froid 32 comporte une partie située au-dessus de la virole tronconique 54 et dans laquelle débouchent les orifices d'aspiration 36a des pompes.

De plus, dans le mode de réalisation de la figure 1a, les extrémités inférieures des pompes comportant les orifices de refoulement 36b sont situées légèrement au-dessus de la virole tronconique inférieure 50, afin qu'il ne soit pas nécessaire de donner à celle-ci une forme complexe à ce niveau ni de faire traverser la cuve interne par les canalisations 38.

Afin d'assurer l'isolation entre les zones chaude et froide au niveau des pompes 36, tout en tenant compte des dilatations différentielles entre la cuve interne 28 et les pompes, on voit aussi sur la figure 1a que des cloches d'étanchéité 64 (par exemple du type à cloche d'argon) sont prévus entre la virole tronconique supérieure 54 et les pompes. De façon plus précise, chacune des cloches d'étanchéité 64 est formée entre une virole 64a solidaire de la tuyauterie de refoulement 38 et s'étendant vers le haut et une virole 64b à section en U renversé fixée à la virole tronconique 54 et chevauchant le bord supérieur de la virole 64a.

Dans une variante non représentée, ces fonctions pourraient aussi être remplies par une virole unique fixée par ses extrémités au diffuseur de la pompe et à la virole tronconique supérieure et équipée d'un soufflet de dilatation.

Compte tenu de la nécessité de prévoir une longueur d'échange suffisante à l'intérieur des échangeurs 34, leurs orifices d'entrée 34a sont situés au-dessus de la virole tronconique 54 et communiquent avec la zone chaude 30 grâce à la présence de cheminées 58 fixées à la virole 54 et entourant les échangeurs 34 au-dessus de celle-ci.

Par ailleurs, les orifices de sortie 34b des échangeurs sont situés pratiquement au-niveau de la partie médiane de la virole tronconique inférieure 50 et débouchent dans la zone froide 32 en partie par l'intermédiaire d'une seconde cheminée 60 fixée à la virole 50 et entourant la partie de l'échangeur 34 située au-dessus de celle-ci. L'étanchéité entre la zone chaude et la zone froide est réalisée au niveau du bord supérieur de la virole 60 par une cloche d'étanchéité 62 (par exemple du type à cloche d'argon). A cet effet, une virole 62a est fixée à l'échangeur 34 au-dessus du bord supérieur de la virole 60 et se prolonge vers le bas autour de cette dernière.

Toujours conformément à l'invention, le cœur 22 du réacteur n'est plus supporté directement par la cuve principale par l'intermédiaire du sommier 24 et du platelage 26 comme dans les structures développées actuellement, mais par la cuve interne 28. De façon plus précise, le platelage 26 repose directement sur la petite base de la virole tronconique inférieure 50 comme l'illustre la figure 1a.

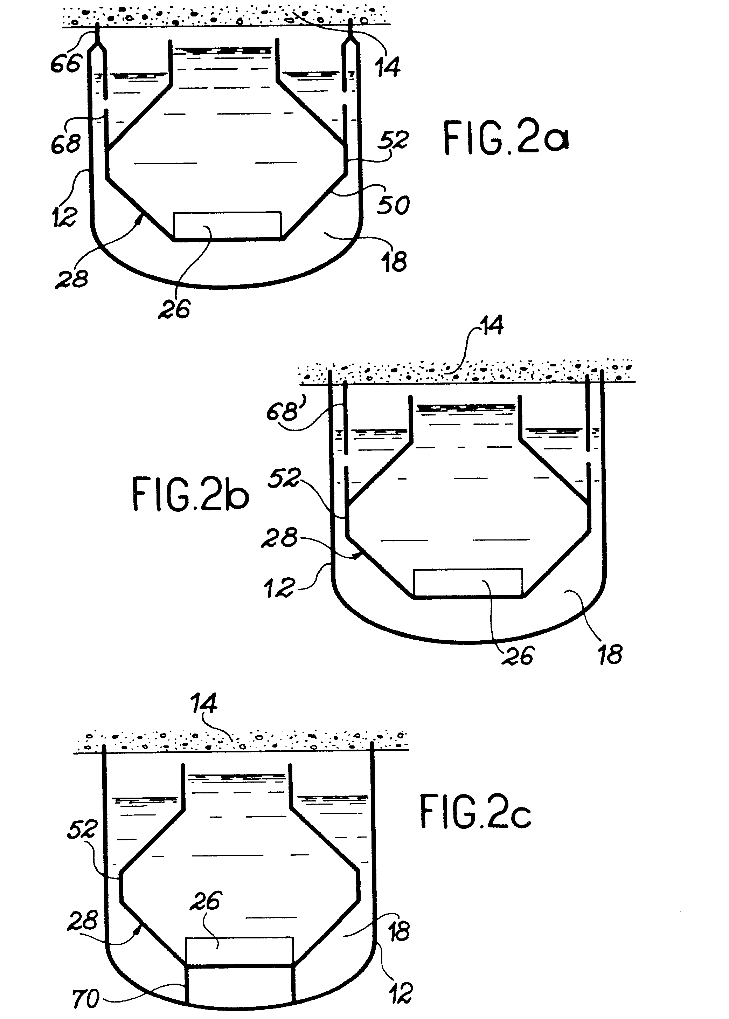

Sur les figures 2a, 2b et 2c sont représentés différents modes de supportage de la cuve interne 28 appliqués au mode de réalisation qui vient d'être décrit en se référant à la figure 1a.

Ainsi, comme l'illustre la figure 2a, la cuve principale 12 et la cuve interne 28 peuvent être toutes deux raccordées à une virole cylindrique ou attente de cuve commune 66, elle-même suspendue à la dalle 14 du réacteur. Ce raccordement présente alors une section en Y renversé et la cuve interne 28 est raccordée à l'attente de cuve 66 par une virole cylindrique ajourée 68 prolongeant vers le haut la virole cylindrique 52 de grand diamètre de la cuve interne.

Cette première solution permet de séparer les fonctions de supportage du cœur (remplie par la cuve interne) et de rétention du sodium (remplie par la cuve principale).

Dans la solution de la figure 2b, chacune des cuves 12 et 28 est suspendue directement à la dalle indépendamment l'une de l'autre. A cet effet, la virole cylindrique de grand diamètre 52 de la cuve interne 28 est prolongée vers le haut par une virole ajourée 68' fixée directement à la dalle 14.

Dans la solution de la figure 2c (également représentée sur la figure 1a) la cuve interne 28 repose sur le fond de la cuve principale 12 par l'intermédiaire d'une virole de supportage 70 prolongeant vers le bas le platelage 26 et transmettant l'ensemble de la charge à la cuve principale par l'intermédiaire d'un point triple. Dans cette solution, la virole tronconique inférieure 50 est soulagée mécaniquement au détriment de la cuve principale 12. De plus, le remplacement de la virole ajourée 68 ou 68' par la virole 70 conduit à un gain de poids pouvant atteindre une centaine de tonnes.

Dans le mode de réalisation de la figure 1b, la cuve interne 28 se compose en partant du bas d'une première virole tronconique 50 dont la petite base est tournée vers le bas, d'une deuxième virole tronconique 54 dont la petite base est tournée vers le haut et d'une virole cylindrique de petit diamètre 56.

De façon plus précise, la virole tronconique supérieure 54 est fixée par sa grande base à la virole tronconique inférieure 50, à proximité de la grande base de celle-ci, par laquelle la cuve interne 28 est alors fixée directement à la cuve principale 12. Ce mode de supportage est représenté très schématiquement sur la figure 2d.

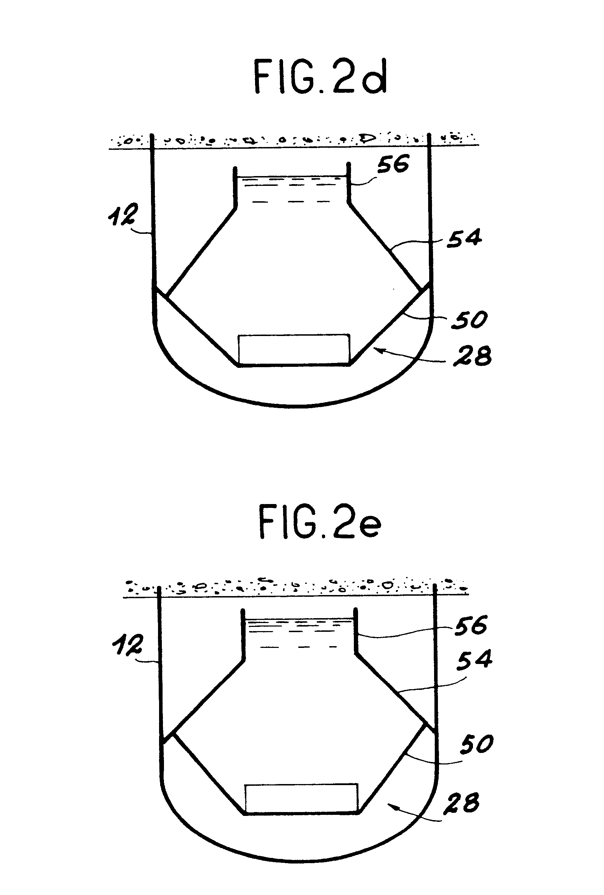

Dans une variante de ce deuxième mode de réalisation de l'invention représentée très schématiquement sur la figure 2e, la disposition est inversée, c'est-à-dire que c'est la virole tronconique inférieure 50 qui est raccordée par sa grande base sur la virole tronconique supérieure 54, à proximité de la grande base de cette dernière, par laquelle la cuve interne 28 est alors fixée directement à la cuve principale 12.

Comme l'illustrent les figures 1b, 2d et 2e, ce mode de réalisation se distingue principalement du précédent par le fait que le sodium contenu dans le collecteur froid 32 est confiné en-dessous de la virole tronconique inférieure 50. En conséquence, l'espace annulaire entourant les viroles 54 et 56 est rempli d'argon 20 comme l'espace surplombant le collecteur chaud 30. Le sodium qui se condense dans cet espace est enlevé par une pompe d'assèchement 80 fixée à la dalle 14 et plongeant jusqu'à proximité de la virole inférieure 50.

Cette solution permet, d'une part, de diminuer la masse totale de sodium, et, d'autre part, de supprimer les contraintes thermiques au niveau de l'attache de la cuve principale 12 sur la dalle 14.

Compte tenu de cette caractéristique, il n'est plus possible, comme dans le mode de réalisation de la figure 1a, d'aspirer le sodium froid par les orifices 36a des pompes directement au-dessus de la virole tronconique supérieure 54. Pour cette raison, on voit sur la figure 1b que les pompes 36 sont logées dans des cheminées 76 fixées de façon étanche à la virole tronconique inférieure 50 et s'élevant jusqu'au dessus du niveau libre du sodium contenu dans le collecteur chaud 30. De plus, afin d'assurer le confinement du sodium à l'intérieur du collecteur chaud tout en tenant compte des dilatations différentielles éventuelles entre la virole tronconique supérieure 54 et la cheminée 76, cette dernière est entourée, au-dessous de la virole 54, par une deuxième cheminée 77 s'élevant au même niveau que la cheminée 76. Ainsi, le sodium liquide contenu dans le collecteur chaud est admis dans l'espace annulaire formé entre les cheminées 76 et 77.

Par ailleurs, on voit sur la figure 1b que les canalisations 38 reliant les orifices de refoulement 36b au sommier 24 sont placées dans le collecteur froid 32, en-dessous de la virole tronconique inférieure 50.

En revanche, la traversée de la cuve interne 28 par les échangeurs 34 peut être réalisée de la même manière que dans le premier mode de réalisation. En particulier, on retrouve sur la figure 1b la cheminée 58 fixée de façon étanche à la virole tronconique supérieure 54 et contenant du sodium chaud, ainsi que la cloche d'étanchéité 62 formée entre une virole 60 fixée à la virole tronconique inférieure 50 et une virole 62a fixée à l'échangeur. Comme l'illustre la figure 1b, on peut toutefois prévoir de prolonger la virole 62a vers le haut au delà des orifices d'entrée 34a, pour former une chicane régularisant l'écoulement du sodium à l'entrée de l'échangeur (une disposition similaire pourrait être adoptée dans le cas de la figure 1a).

On a aussi représenté sur la figure 1b une disposition particulière également applicable au mode de réalisation de la figure 1a, selon laquelle une virole tronconique supplémentaire 78 est disposée à l'intérieur de la cuve interne 28 et fixée à celle-ci à proximité des grandes bases des viroles 50 et 54. Cette virole 78 est prolongée autour du sommier 24 par une virole cylindrique 79, de façon à isoler entre les viroles 50, 78 et 79 une zone de sodium statique. Les viroles 78 et 79 constituent ainsi un baffle thermique 72'. L'étanchéité entre la virole 78 et les viroles ou cheminées 60 et 76 peut notamment être obtenue au moyen de cloches d'étanchéité 81 et 82, respectivement, par exemple du type à cloches d'argon.

Grâce aux dimensions des différentes viroles constituant la cuve interne 28 selon l'invention, le cheminement du sodium 18 entre la zone chaude 30 et la zone froide 32 par l'intermédiaire des échangeurs 34 et des pompes 36 peut se faire sans qu'il soit nécessaire d'ajouter à la cuve interne des pièces nombreuses et de forme complexe.

En particulier, la forme particulière de la cuve interne 28 selon l'invention permet d'incorporer les échangeurs 34 dans le circuit de sodium primaire sans qu'il soit nécessaire de relier ces composants à la cuve interne par des structures de liaison de forme complexe comme c'est le cas dans les réacteurs à neutrons rapides de type intégré comportant une cuve interne de forme cylindrique.

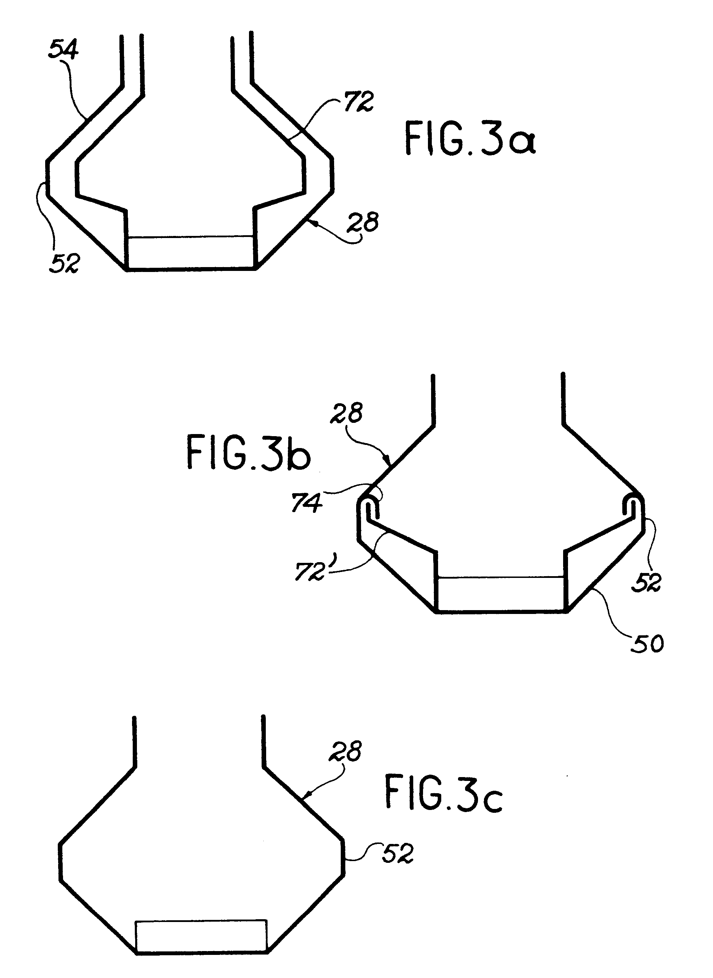

Comme l'illustre la figure 3a, la cuve interne 28 peut être totalement doublée intérieurement par un baffle thermique 72. Il est à noter qu'un tel baffle existe dans les solutions actuelles comportant une cuve interne à redan. En plus de sa fonction d'isolant thermique, il participe à la tenue mécanique de la cuve interne.

En ce qui concerne ce dernier point, il faut noter que la forme de la cuve interne selon l'invention est telle que la partie supérieure du baffle 72 n'est pas nécessaire à la tenue mécanique de la virole tronconique supérieure 54. En effet, la forme de cette virole est telle que les efforts dus à la pression sont partiellement compensés par son poids propre. La virole tronconique 54 est donc mécaniquement moins chargée que la partie du baffle 72 qui la protège. L'intérêt de la partie supérieure du baffle réside donc uniquement dans son rôle de calorifuge. En conséquence, si le flux thermique de fuite au travers de la virole tronconique supérieure 54 est acceptable, cette partie supérieure du baffle peut être supprimée. Si cela n'est pas le cas, cette partie supérieure du baffle peut aussi être remplacée par un calorifuge immergé.

On a représenté sur la figure 3b le cas où seule la virole cylindrique de grand diamètre 52 et la virole tronconique inférieure 50 de la cuve interne sont doublées par un baffle 72'. Dans ce cas, comparable à celui qui a été décrit précédemment en se référant à la figure 1b, l'étanchéité entre le bord supérieur libre du baffle 72' et la cuve interne 28 peut être réalisée en variante au moyen d'une cloche d'étanchéité 74 (par exemple du type à cloche d'argon).

De plus, il faut noter que la virole tronconique inférieure 50 ne se trouve pas en contact direct avec le sodium chaud sortant du cœur du réacteur mais avec du sodium stagnant et de ce fait moins chaud qui ne requiert pas nécessairement la présence d'un baffle à proximité de cette virole. Le baffle peut donc être totalement supprimé comme l'illustre la figure 3c. Cette solution est particulièrement adaptée au cas de la figure 2c où la cuve interne 28 repose sur la cuve principale 12 de telle sorte que la virole tronconique inférieure 50 est mécaniquement peu chargée.

Bien entendu, la suppression partielle ou totale du baffle doublant la cuve interne permet un gain de poids équivalent à la partie supprimée. De plus, elle autorise une réduction du diamètre des cuves et donc un gain de poids supplémentaire au niveau de certaines structures (cuves, dalle, etc).

La description qui précède fait apparaître que la forme de la cuve interne selon l'invention conduit à un gain de poids très sensible des structures internes du réacteur: de l'ordre de 1000 tonnes par rapport au réacteur Super-Phénix.

On remarquera également que le volume de la zone chaude ainsi que la surface libre du sodium relativement chaud contenu dans cette zone sont relativement faibles par rapport au volume et à la surface correspondants de la zone froide, ce qui permet un rendement thermique amélioré.

En outre, la structure de la cuve interne selon l'invention permet d'assurer le noyage du cœur en cas de rupture simultanée de la cuve principale 12 et de la cuve de sécurité 17. En effet, on voit sur la figure 1a que les cloches d'étanchéité 62 qui entourent les échangeurs 34, ainsi que les cloches d'étanchéité 64 qui entourent les pompes 36 sont situées légèrement au-dessus du niveau supérieur du cœur, de telle sorte que les assemblages ne sont pas dénoyés tant que le fond de la cuve interne 28 reste intact.

Parmi les autres avantages résultant de la structure selon l'invention, on notera que la forme et la fabrication de la cuve interne, ainsi que celles du baffle thermique qui peut éventuellement la doubler sont moins compliquées que dans les structures antérieures. De plus, en fonctionnement normal, toutes les structures travaillent en pression intérieure et présentent une grande rigidité et une bonne tenue aux séismes. Citons encore les avantages suivants procurés par l'invention: le platelage est irrigué intérieurement et extérieurement par le sodium froid, le fond de cuve ne supporte que la pression statique du sodium, le niveau du sodium froid est plus bas que dans Super-Phénix, et donc, la longueur des attentes de cuve est augmentée d'autant. En outre, la présence d'une grande surface libre de sodium relativement froid conduit à un grand volume d'argon de couverture 20 assurant une bonne isolation thermique et réduisant les gradients thermiques au niveau des parois supérieures de la cuve principale. Ces conditions sont encore améliorées dans le cas de la variante représentée sur la figure 1b, puisqu'alors il n'y a pas de sodium, mais de l'argon, au-dessus de la virole tronconique supérieure.

**Revendications**

1. Réacteur nucléaire à neutrons rapides refroidi par un métal liquide (18), de type intégré et comprenant une cuve principale (12) obturée par une dalle (14) et contenant le cœur (22) du réacteur, une cuve interne (28) disposée à l'intérieur de la cuve principale et définissant dans cette dernière une zone chaude (30) formée à l'intérieur de la cuve interne et remplie de métal liquide relativement chaud et une zone froide (32) formée entre la cuve principale et la cuve interne et remplie de métal liquide relativement froid, au moins une pompe (36) de circulation au travers du cœur du métal liquide entre la zone froide et la zone chaude et au moins un échangeur de chaleur (34) disposé entre la zone chaude et la zone froide, la cuve interne comprenant une virole tronconique supérieure (54) reliée par sa grande base à une virole inférieure (50) et dont la petite base est prolongée par une virole cylindrique de petit diamètre (56), le cœur du réacteur reposant sur le fond de la virole inférieure par l'intermédiaire d'une structure de supportage et d'alimentation (24, 26), caractérisé en ce que la virole inférieure (50) est une virole tronconique reliée par sa grande base à la virole tronconique supérieure.

2. Réacteur selon la revendication 1, caractérisé en ce que la virole tronconique supérieure (54) est reliée, par sa grande base, à la virole tronconique inférieure (50), au voisinage de la grande base de celle-ci (figure 2d).

3. Réacteur selon la revendication 1, caractérisé en ce que la virole tronconique inférieure (50) est reliée, par sa grande base, à la virole tronconique supérieure (54), au voisinage de la grande base de celle-ci (figure 2e).

4. Réacteur selon la revendication 1, caractérisé en ce que les deux viroles tronconiques (50, 54) sont reliées, directement entre elles, par leurs grandes bases.

5. Réacteur selon la revendication 1, caractérisé en ce que les deux viroles tronconiques (50, 54) sont reliées, suivant leurs grandes bases, par l'intermédiaire d'une virole cylindrique.

6. Réacteur selon l'une quelconque des revendications 1 et 2, caractérisé en ce que la virole tronconique inférieure (50), est reliée, de façon étanche, par sa grande base, à la cuve principale (12), des moyens de pompage (80) étant disposés dans l'espace formé juste au-dessus de cette liaison étanche.

7. Réacteur selon l'une quelconque des revendications 1 et 3, caractérisé en ce que la virole tronconique supérieure (54), est reliée, de façon étanche, par sa grande base, à la cuve principale (12), des moyens de pompage (80) étant disposés dans l'espace formé juste au-dessus de cette liaison étanche.

8. Réacteur selon l'une quelconque des revendications 1, 4 et 5, caractérisé en ce que la cuve interne (28) est suspendue à la dalle (14) par une virole cylindrique ajourée (68, 68') prolongeant vers le haut ladite virole de grand diamètre (52).

9. Réacteur selon la revendication 8, caractérisé en ce que la virole cylindrique ajourée (68) et la cuve principale (12) sont suspendues à une virole cylindrique unique (66) elle-même suspendue à la dalle.

10. Réacteur selon la revendication 8, caractérisé en ce que la virole cylindrique ajourée (68') est suspendue directement à la dalle.

11. Réacteur selon l'une quelconque des revendications 1, 4 et 5, caractérisé en ce que la cuve interne (28) repose sur le fond de la cuve principale (12) par l'intermédiaire d'une virole d'appui (70).

12. Réacteur selon l'une quelconque des revendications 1, 2, 3, 6 et 7, caractérisé en ce que les deux viroles tronconiques (50, 54) sont traversées par des cheminées (76) contenant du sodium froid, en ce que les pompes (36) sont suspendues à la dalle et placées à l'intérieur desdites cheminées, et, en ce que lesdites pompes communiquent par des tuyauteries (38) avec un sommier d'alimentation (24) du cœur, en traversant, de façon étanche, le fond de la cuve interne.

13. Réacteur selon la revendication 12, caractérisé en ce que ladite zone froide (32) est limitée par le fond de la cuve principale, la virole tronconique inférieure (50) et les cheminées (76) où sont placées les pompes.

14. Réacteur selon les revendications 1, 4, 5 et 8 à 11, caractérisé en ce que les pompes (36) sont suspendues à la dalle et traversent de façon étanche la virole tronconique supérieure (54) pour communiquer par des tuyauteries (38) avec un sommier d'alimentation (24) du cœur constituant une partie de la structure de supportage.

15. Réacteur selon l'une quelconque des revendications 1 à 14, caractérisé en ce que la virole tronconique supérieure (54) supporte des cheminées (58) contenant du métal liquide chaud, et en ce que les échangeurs (34) sont suspendus à la dalle, disposés dans lesdites cheminées, et traversent de façon étanche la virole tronconique inférieure (50) pour déboucher dans la zone froide.

16. Réacteur selon les revendications 14 et 15, caractérisé en ce que les pompes (36) et les échangeurs (34) traversent respectivement de façon étanche les viroles tronconiques supérieure (54) et inférieure (56) par l'intermédiaire de cloches d'étanchéité (64, 62) dont le niveau est supérieur au niveau haut du cœur (22).

17. Réacteur selon l'une quelconque des revendications 1 à 16, caractérisé en ce que la cuve interne (28) est doublée sur toute sa hauteur par un baffle thermique (72).

18. Réacteur selon l'une quelconque des revendications 1 à 16, caractérisé en ce que seule la partie inférieure de la cuve interne (28) est doublée par un baffle thermique (72') dont le rebord supérieur est surplombé par une cloche d'étanchéité (74) portée par la cuve interne.

## Claims

1. Fast-neutron nuclear reactor cooled with a liquid metal (18), of integrated type and comprising a main vessel (12) closed by a slab (14) and containing the reactor core (22), an inner vessel (28) arranged inside the main vessel and defining in the latter a hot zone (30) formed inside the inner vessel and filled with relatively hot liquid metal and a cold zone (32) formed between the main vessel and the inner vessel and filled with relatively cold liquid metal, at least one pump (36) for circulating liquid metal through the core between the cold zone and the hot zone and at least one heat exchanger (34) arranged between the hot zone and the cold zone, the inner vessel comprising an upper frustoconical shell (54) with its large base connected to a lower shell (50) and whose small base is extended by a cylindrical shell of small diameter (56), the reactor core resting on the bottom of the lower shell through the intermediacy of a support and feed structure (24, 26), characterized in that the lower shell (50) is a frustoconical shell with its large base connected to the upper frustoconical shell.

2. Reactor according to Claim 1, characterized in that the upper frustoconical shell (54) is connected, by means of its large base, to the lower frustoconical shell (50), in the vicinity of the latter's large base (Figure 2d).

3. Reactor according to Claim 1, characterized in that the lower frustoconical shell (50) is connected, by means of its large base, to the upper frustoconical shell (54), in the vicinity of the latter's large base (Figure 2e).

4. Reactor according to Claim 1, characterized in that the two frustoconical shells (50, 54) are connected directly to each other by means of their large bases.

5. Reactor according to Claim 1, characterized in that the two frustoconical shells (50, 54) are connected, at their large bases, through the intermediacy of a cylindrical shell.

6. Reactor according to either of Claims 1 and 2, characterized in that the lower frustoconical shell (50) is connected in a leakproof manner, by means of its large base, to the main vessel (12), pumping means (80) being arranged in the space formed just above this leakproof connection.

7. Reactor according to either of Claims 1 and 3, characterized in that the upper frustoconical shell (54) is connected in a leakproof manner, by means of its large base, to the main vessel (12), pumping means (80) being arranged in the space formed just above this leakproof connection.

8. Reactor according to any one of Claims 1, 4 and 5, characterized in that the inner vessel (28) is suspended from the slab (14) by a perforated cylindrical shell (68, 68') extending the said shell of large diameter (52) upwards.

9. Reactor according to Claim 8, characterized in that the perforated cylindrical shell (68) and the main vessel (12) are suspended from a single cylindrical shell (66) which is itself suspended from the slab.

10. Reactor according to Claim 8, characterized in that the perforated cylindrical shell (68') is suspended directly from the slab.

11. Reactor according to any one of Claims 1, 4 and 5, characterized in that the inner vessel (28) rests on the bottom of the main vessel (12) through the intermediacy of a supporting shell (70).

12. Reactor according to any one of Claims 1, 2, 3, 6 and 7, characterized in that shafts (76) containing cold sodium pass through the two frustoconical shells (50, 54), in that the pumps (36) are suspended from the slab and placed inside the said shafts, and in that the said pumps are in communication by means of pipework (38) with a core feed grid (24), passing in a leakproof manner through the bottom of the inner vessel.

13. Reactor according to Claim 12, characterized in that the said cold zone (32) is bounded by the bottom of the main vessel, the lower frustoconical shell (50) and the shafts (76) where the pumps are placed.

14. Reactor according to Claims 1, 4, 5 and 8 to 11, characterized in that the pumps (36) are suspended from the slab and pass in a leakproof manner through the upper frustoconical shell (54) to communicate by means of pipework (38) with a core feed grid (24) forming a part of the support structure.

15. Reactor according to any one of Claims 1 to 14, characterized in that the upper frustoconical shell (54) supports shafts (58) containing hot liquid metal, and in that the exchangers (34) are suspended from the slab, are arranged in the said shafts and pass in a leakproof manner through the lower frustoconical shell (50) to open into the cold zone.

16. Reactor according to Claims 14 and 15, characterized in that the pumps (36) and the exchangers (34) pass in a leakproof manner through the upper (54) and lower (56) frustoconical shells respectively through the intermediacy of bell seals (64, 62) the level of which is above the high level of the core (22).

17. Reactor according to any one of Claims 1 to 16, characterized in that the inner vessel (28) is lined with a heat baffle (72) throughout its height.

18. Reactor according to any one of Claims 1 to 16, characterized in that only the lower part of the inner vessel (28) is lined with a heat baffle (72′) whose upper rim is overhung by a bell seal (74) carried by the inner vessel.

**Patentansprüche**

1. Schnellbrüterreaktor vom integrierten Typ, der durch ein Flüssigmetall (18) gekühlt ist und umfasst einen Hauptbehälter (12), der mit einer Decke (14) überdeckt ist und den Reaktorkern (22) enthält, einen inneren Behälter (28), der im Inneren des Hauptbehälters angeordnet ist und in letzterem einen heissen Bereich (30), der im Inneren des inneren Behälters gebildet und mit relativ heissem Flüssigmetall gefüllt ist, und einen kalten Bereich (32) begrenzt, der zwischen dem Hauptbehälter und dem inneren Behälter gebildet und mit relativ kaltem Flüssigmetall gefüllt ist, wenigstens eine Pumpe (36) zum Umwälzen des Flüssigmetalls durch den Kern zwischen dem kalten Bereich und dem heissen Bereich und wenigstens einem Wärmetauscher (34), der zwischen dem heissen Bereich und dem kalten Bereich angeordnet ist, wobei der innere Behälter einen kegelstumpfförmigen oberen Mantelring (54) aufweist, der mit seiner grossen Basis mit einem unteren Mantelring (50) verbunden ist und dessen kleine Basis durch einen zylindrischen Metallring (56) kleinen Durchmessers verlängert ist, und der Reaktorkern auf dem Boden des inneren Mantelrings mittels einer Stütz- und Versorgungsstruktur (24, 26) ruht, dadurch gekennzeichnet, dass der untere Mantelring (50) ein kegelstumpfförmiger Mantelring ist, der mit seiner grossen Basis mit dem oberen kegelstumpfförmigen Mantelring verbunden ist.

2. Reaktor nach Anspruch 1, dadurch gekennzeichnet, dass der obere kegelstumpfförmige Mantelring (54) mit seiner grossen Basis mit dem unteren kegelstumpfförmigen Mantelring (50) in der Nähe dessen grosser Basis verbunden ist (Fig. 2d).

3. Reaktor nach Anspruch 1, dadurch gekennzeichnet, dass der untere kegelstumpfförmige Mantel (50) mit seiner grossen Basis mit dem oberen kegelstumpfförmigen Mantelring (54) in der Nähe dessen grosser Basis verbunden ist (Fig. 2e).

4. Reaktor nach Anspruch 1, dadurch gekennzeichnet, dass die zwei kegelstumpfförmigen Mantelringe (50, 54) unmittelbar miteinander mit ihren grossen Basen verbunden sind.

5. Reaktor nach Anspruch 1, dadurch gekennzeichnet, dass die zwei kegelstumpfförmigen Mantelringe (50, 54) an ihren grossen Basen über einen zylindrischen Mantelring unmittelbar verbunden sind.

6. Reaktor nach Anspruch 1 oder 2, dadurch gekennzeichnet, dass der untere kegelstumpfförmige Mantelring (50) dicht mit seiner grossen Basis mit dem Hauptbehälter (12) verbunden ist und dass Pumpeinrichtungen (80) in dem Raum angeordnet sind, der unmittelbar oberhalb dieser dichten Verbindung gebildet ist.

7. Reaktor nach einem der Ansprüche 1 bis 3, dadurch gekennzeichnet, dass der obere kegelstumpfförmige Mantelring (54) dicht mit seiner grossen Basis mit dem Hauptbehälter (12) verbunden ist und dass Pumpeinrichtungen (80) in dem Raum angeordnet sind, der unmittelbar oberhalb dieser dichten Verbindung gebildet ist.

8. Reaktor nach einem der Ansprüche 1, 4 oder 5, dadurch gekennzeichnet, dass der innere Behälter (28) mittels eines durchbrochenen, zylindrischen Mantelrings (68, 68′) an der Decke (14) aufgehängt ist, der den Mantelring (52) mit grossem Durchmesser nach oben verlängert.

9. Reaktor nach Anspruch 8, dadurch gekennzeichnet, dass der durchbrochene, zylindrische Mantelring (68) und der Hauptbehälter (12) an einem einzigen zylindrischen Mantelring (66) aufgehängt sind, welcher selbst an der Decke aufgehängt ist.

10. Reaktor nach Anspruch 8, dadurch gekennzeichnet, dass der durchbrochene, zylindrische Mantelring (68′) unmittelbar an der Decke aufgehängt ist.

11. Reaktor nach einem der Ansprüche 1, 4 oder 5, dadurch gekennzeichnet, dass der innere Behälter (28) auf dem Boden des Hauptbehälters (12) mittels eines Mantelrings (70) ruht.

12. Reaktor nach einem der Ansprüche 1, 2, 3, 6 oder 7, dadurch gekennzeichnet, dass die zwei kegelstumpfförmigen Mantelringe (50, 54) von kaltes Natrium enthaltenden Schächten (76) durchquert sind, dass die Pumpen (36) an der Decke aufgehängt und im Inneren dieser Schächte angeordnet sind und dass die Pumpen über Rohrleitungen (38) mit einem Versorgungsträger (24) für den Kern verbunden sind, wobei sie dicht den Boden des inneren Behälters durchqueren.

13. Reaktor nach Anspruch 12, dadurch gekennzeichnet, dass der kalte Bereich (32) von dem Boden des Hauptbehälters, dem unteren kegelstumpfförmigen Mantelring (50) und den Schächten (76), wo die Pumpen angeordnet sind, begrenzt ist.

14. Reaktor nach den Ansprüchen 1, 4, 5 und 8–11, dadurch gekennzeichnet, dass die Pumpen (36) an der Decke aufgehängt sind und dicht den oberen kegelstumpfförmigen Mantelring (54) durchqueren, um über die Rohrleitungen (38) mit einem Versorgungsträger (24) für den Kern in Verbindung zu stehen, der einen Teil der Stützstruktur bildet.

15. Reaktor nach einem der Ansprüche 1 bis 14, dadurch gekennzeichnet, dass der obere kegelstumpfförmige Mantelring (54) heisses Flüssigmetall enthaltende Schächte (58) abstützt und dass die Wärmetauscher (34) in diesen Schächten angeordnet an der Decke aufgehängt sind und dicht den unteren kegelstupfförmigen Mantelring (50) durchqueren, um in den kalten Bereich zu münden.

16. Reaktor nach den Ansprüchen 14 und 15, dadurch gekennzeichnet, dass die Pumpen (36) und die Wärmetauscher (34) dicht den oberen (54) und den unteren kegelstumpfförmigen Mantelring (56) mittels Dichtungsglocken (64, 62) durchqueren, deren Höhenlage sich oberhalb des oberen Niveaus des Kerns (22) befindet.

17. Reaktor nach einem der Ansprüche 1 bis 16, dadurch gekennzeichnet, dass der innere Behälter (28) über seine gesamte Höhe mit einem Wärmebaffel (72) ausgekleidet ist.

18. Reaktor nach einem der Ansprüche 1 bis 16, dadurch gekennzeichnet, dass nur der untere Teil des inneren Behälters (28) mit einem Wärmebaffel (72') ausgekleidet ist, über dessen oberen Rand eine Dichtungsglocke (74) hängt, die von den inneren Behältern getragen ist.

FIG. 1a

# FIG.1b

0 117 802

FIG.2a

FIG.2b

FIG.2c

15

# FIG.2d

# FIG.2e

FIG.3a

FIG.3b

FIG.3c